# EUROPEAN PATENT SPECIFICATION

(11) **EP 2 784 844 B1**
(45) Date of publication and mention of the grant of the patent: **09.11.2016**
(21) Application number: 12850984.1
(22) Date of filing: 06.09.2012
(51) Int. Cl.: H01M 8/18, H01M 8/0286, C08J 5/22, H01M 8/0289

(54) **METHOD FOR MANUFACTURING O-RING ION EXCHANGE MEMBRANE INTEGRATED COMPONENT**
VERFAHREN ZUR HERSTELLUNG EINER IN EINE RINGFÖRMIGE IONENAUSTAUSCHMEMBRAN INTEGRIERTEN KOMPONENTE
PROCÉDÉ DE FABRICATION DE COMPOSANT INTÉGRÉ À MEMBRANE D'ÉCHANGE IONIQUE TORIQUE

(30) Priority: 22.11.2011 CN 201110376948
(43) Date of publication of application: 01.10.2014
(73) Proprietor: Shenzhen Jinfan Power Co., Ltd., Shenzhen, Guangdong 518000 (CN)
(72) Inventor: ZHENG, Yijun, Shenzhen, Guangdong 518000 (CN); ZHENG, Dongdong, Shenzhen, Guangdong 518000 (CN)
(74) Representative: Gulde & Partner
(86) International application number: PCT/CN2012/081030
(87) International publication number: WO 2013/075530

(56) References cited:
- WO-A1-2008/000719
- CN-A- 101 367 903
- CN-A- 101 651 220
- CN-A- 101 759 865
- CN-A- 102 386 346
- CN-Y- 201 266 642
- JP-A- 2010 015 805

## Description

### FIELD

The present disclosure relates to a vanadium redox battery field, and more particularly to methods of making an integrated ion membrane sealing ring assembly used in the vanadium redox battery.

### BACKGROUND

An ion membrane surface made by a traditional method of making an ion membrane may have small wrinkles and water marks, causing the ion membrane surface to be not as flat as desired. During the use of this ion membrane, impurities may easily accumulate in a wrinkled part of the ion membrane. These impurities may reduce the lifetime of the ion membrane, affect a normal use of the corresponding vanadium redox pile, and reduce the working efficiency of the vanadium redox pile.

Moreover, a vanadium redox battery pile of prior art consists of at least two pile units, and all the pile units overlap with each other. A vanadium redox battery pile comprises a first board and a second frame board. A sealing ring clamping slot is configured on each of the first frame board and the second frame board. A first sealing ring is configured to be received in the sealing ring clamping slot of the first frame board, and a second sealing ring is configured to be received in the sealing ring clamping slot of the second frame board. The ion membrane is disposed between the first frame board and the second frame board. The ion membrane, the first sealing ring and the second sealing ring are formed separately. The ion membrane is fixed by pressing the first sealing ring and the second sealing ring to each other, while the ion membrane is not connected to the sealing ring or the second sealing ring. During use of the vanadium redox battery pile with this mounting structure, the sealing rings and the ion membrane are formed separately, thus electrolyte leakage and mixing of positive and negative electrolytes may happen easily, resulting in decrease of battery pile power and even resulting in battery damages. Then the vanadium redox battery pile is unable to work.

WO 2008/000719 A1 discloses a method of making an integrated component comprising a sealing ring and an ion membrane by applying the gasket by injection molding, of the prior art.

### Summary

It is necessary to develop an integrated assembly having a sealing ring and an ion membrane, so as to increase performance of the vanadium redox battery pile.

The present disclosure provides a method of making an integrated ion membrane sealing ring assembly.

The technical solution of the present disclosure provides a method of making the integrated ion membrane sealing ring assembly, the method includes:
A: mixing sulfonic resin with dimethylformamide based on a ratio of 0.95~1.05: 90~98 by weight, and stirring;
B: filtering the mixed liquid obtained in step A;
C: placing the filtrate into a plastic container for precipitating;
D: seating the sealing ring into a worktable of a drying apparatus;
E: pouring the precipitated filtrate into the worktable of the drying apparatus, drying the same under a constant temperature selected between a temperature range of 110°C to 130°C for 80 to 100 minutes, and vacuuming while drying under the constant temperature;
F: taking the dried integrated ion membrane sealing ring assembly out of the drying apparatus, and then cooling the assembly.

According to an optimized technical solution of the present disclosure: step A may specifically include: putting sulfonic resin with dimethylformamide based on a ratio of 1: 94.45 by weight into a stainless steel container and mixing; treating the same under a constant temperature of 230°C and an air pressure of 0.3 MPa∼0.4 MPa for one hour, and stirring based on a revolving speed of 60∼100 revolutions per minute while treating.

According to an optimized technical solution of the present disclosure: the sulfonic resin is perfluorinated sulfonic resin.

According to an optimized technical solution of the present disclosure: in step B, the filtering is carried out by using a titanium-made filter.

According to an optimized technical solution of the present disclosure: step C may specifically include: placing the filtrate in the plastic container and letting the same sit under a constant temperature of 25 °C for 20 days.

According to an optimized technical solution of the present disclosure: the plastic container is transparent or white.

According to an optimized technical solution of the present disclosure: step D may specifically include: seating a bottom side of the sealing ring into a sealing ring clamping slot of the worktable of the drying apparatus; and forming protrusions on a top side of the sealing ring.

According to an optimized technical solution of the present disclosure: step E may specifically include: pouring the precipitated filtrate into the worktable of the drying apparatus, wherein the worktable has a flat face, and sidewalls formed around a periphery of the worktable; drying the precipitated filtrate under a constant temperature of 120°C for 90 minutes, and vacuuming while drying under the constant temperature, wherein the drying apparatus is an electrical pulse infrared heater.

According to an optimized technical solution of the present disclosure: step F may specifically include: taking the dried integrated ion membrane sealing ring assembly out of the drying apparatus, placing the same on a flat cooling table and cooling under room temperature.

The surface of the ion membrane of the integrated ion membrane sealing ring assembly made by the present disclosure can be substantially smooth and flat, and the flexibility and airtightness of the ion membrane are improved effectively. Thus, the lifetime of the ion membrane can be increased effectively. The ion membrane and the sealing ring are designed as an integrated structure, mounted in the first frame board and the second frame board, and connected and fixed integrally to each other. The mounted ion membrane of the integrated ion membrane sealing ring assembly can be completely smooth and flat and is not easy to dislocate and wrinkle. Moreover, better sealing effect is provided during the use of the integrated ion membrane sealing ring assembly, so as to avoid electrolyte leakage and mixing of positive and negative electrolytes, thereby making the vanadium battery more stable and increasing efficiency of the vanadium redox pile more effectively.

### BRIEF DESCRIPTION OF THE DRAWINGS

Fig. 1 is a flow chart of a method of making an integrated ion membrane sealing ring assembly of the present disclosure.
Fig. 2 is a schematic cross sectional view of a drying apparatus used in the method of making the integrated ion membrane sealing ring assembly of the present disclosure.
Fig. 3 is a side cross-section view after putting the sealing ring in the sealing ring clamping slot of a worktable of the drying apparatus;
Fig. 4 is a side cross-section view after formation of the ion membrane and the sealing ring in the worktable of the drying apparatus.

### DETAILED DESCRIPTION

The followings are in detail to explain technical solutions of the present disclosure based on the drawings.

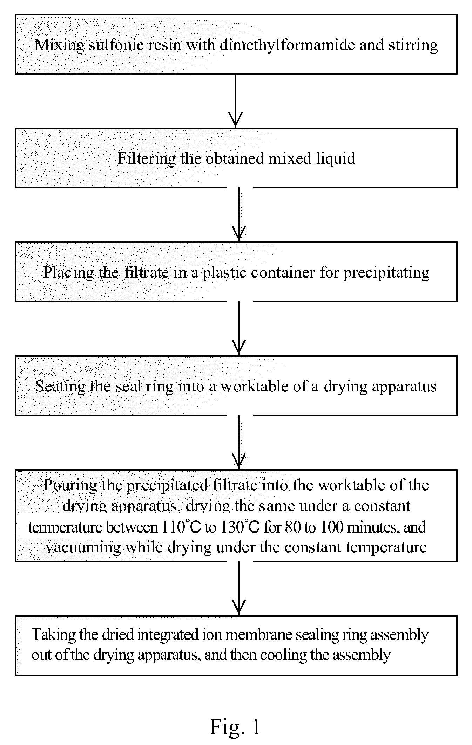

Please refer to a flow chart of a method of making an integrated ion membrane sealing ring assembly of the present disclosure shown in Fig. 1. As shown in Fig. 1, the present disclosure provides a method of making an integrated ion membrane sealing ring assembly. The method includes:
A: mixing sulfonic resin with dimethylformamide based on the a ratio of 0.95∼1.05: 90∼98 by weight, and stirring;
B: filtering the mixed liquid obtained in step A;
C: placing the filtrate into a plastic container for precipitating;
D: seating the sealing ring into a worktable of a drying apparatus;
E: pouring the precipitated filtrate into the worktable of the drying apparatus, drying the same under a constant temperature selected between a temperature range of 110°C to 130°C for 80 to 100 minutes, and vacuuming while drying under the constant temperature;
F: taking the dried integrated ion membrane sealing ring assembly out of the drying apparatus, and then cooling the assembly.

In an optimized technical solution of the present disclosure, step A may specifically include: putting sulfonic resin with dimethylformamide based on a ratio of 1: 94.45 by weight into a stainless steel container and mixing; treating the same in a constant temperature of 230°C and an air pressure of 0.3MPa∼0.4 MPa for one hour, and stirring based on a revolving speed of 60∼100 revolutions per minute while treating. An optimized selection of the sulfonic resin is perfluorinated sulfonic resin. The selected treating temperature and pressure in step A of the present disclosure are the best values obtained by the inventor(s) through a large number of experiments, not values randomly selected according to common knowledge. It is found by the inventor(s)' experiments that in some embodiments setting a constant temperature of 230°C as a treating temperature and an air pressure 0.3MPa∼0.4 MPa determine the final quality of the ion membrane.

In step B, the filtering is carried out by using the titanium-made filter. The main considerations for selecting a titanium-made filter are that chemical components of the titanium materials are more stable and are not easy to react with filtrate chemically.

In the technical solution of the present disclosure, step C may specifically include: placing the filtrate in the plastic container and letting the same sit under a constant temperature of 25°C for 20 days. The plastic container is transparent or white. The main purposes of selecting a transparent or white container are that it is convenient to observe the precipitating situation in the plastic container at any time and find problems that arise in the precipitating process in time.

In the technical solution of the present disclosure, step D may specifically include: seating a bottom side of the sealing ring into a sealing ring clamping slot of the worktable of the drying apparatus; and forming protrusions on a top side of the sealing ring. To better place the bottom side of the sealing ring into the sealing ring clamping slot of the worktable of the drying apparatus, the bottom side of the sealing ring is therefore designed to be flat. The purpose of forming protrusions on the top side of the sealing ring is to better combine the filtrate obtained in step C with the sealing ring.

In the technical solution of the present disclosure, step E may specifically include: pouring the precipitated filtrate into the worktable of the drying apparatus, wherein the worktable has a flat face, and sidewalls formed around a periphery of the worktable; drying the precipitated filtrate under a constant temperature of 120°C for 90 minutes, and vacuuming while drying under the constant temperature. The drying apparatus is an electrical pulse infrared heater. The sidewalls are disposed around the worktable such that the worktable of the drying apparatus becomes a small cavity that contains the filtrate, and thereby allows formation of the ion membrane.

Step F may specifically include taking the dried integrated ion membrane sealing ring assembly out of the drying apparatus, and placing the same on a flat cooling table and cooling under a room temperature.

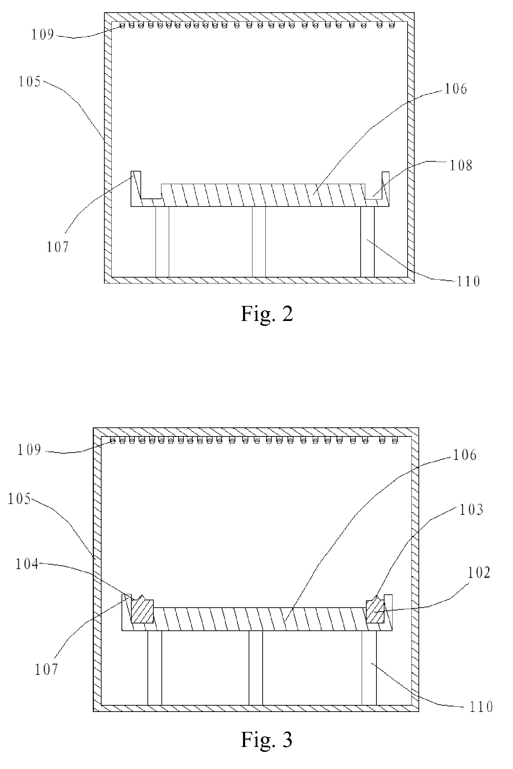

Referring to Fig. 2, a schematic cross sectional view of the drying apparatus used in the method of making an integrated ion membrane sealing ring assembly of the present disclosure is shown. An apparatus for making an integrated ion membrane sealing ring assembly may include a body 105. A worktable 106 is disposed in the body 105. A sidewall 107 is disposed around a periphery of the worktable 106. A sealing ring clamping slot 108 is defined by the sidewall 107. Specifically, the sealing ring clamping slot 108 is formed at an inner edge of the sidewall 107. As shown in Fig. 3, a pillar 110 is formed under the worktable 106. One end of the pillar 110 is connected to the worktable 106, and the other end of the pillar 110 is connected to a bottom wall of the body 105. A heating apparatus 109 is disposed on a top wall of the body 105 and is used to provide heat during formation of an integrated structure of an ion membrane 101 and a sealing ring 102.

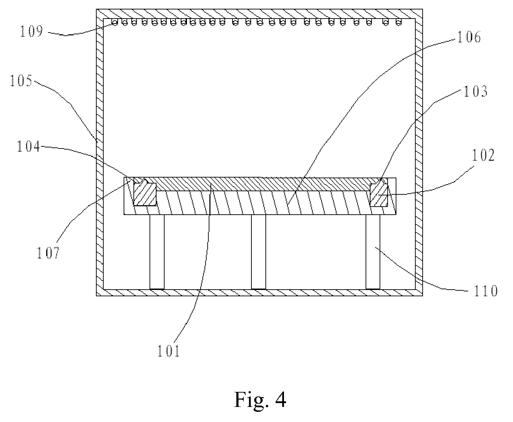

Fig. 3 shows a side cross-section view after putting the sealing ring 102 into the sealing ring clamping slot 108 of the worktable of the drying apparatus and Fig. 4 shows a side cross-section view after formation of the ion membrane and the sealing ring in the worktable of the drying apparatus. As shown in Fig. 3, the sealing ring 102 has been seated into a clamping slot of the worktable 106. A bottom side of the sealing ring 102 is leveled. The sealing ring 102 is clamped in the sealing ring clamping slot 108 of the worktable 106. Protrusions are disposed on the top side 104 of the sealing ring 102 protruding out of the sealing ring clamping slot 108. The upper ends of the protrusions formed on the top side 104 of the sealing ring 102 are positioned at a same level as an upper edge of the sidewall 107 or slightly lower than an upper edge of the sidewall 107.

When using the method of making integrated ion membrane sealing ring assembly of the present disclosure, it needs only to clamp the sealing ring 102 in the sealing ring clamping slot 108 of the worktable 106 in advance, and then pour the precipitated solution for manufacturing the ion membrane in step C into the worktable 106. The sidewall 107 is disposed around the worktable 106, thus a certain amount ion membrane filtrate will be maintained in the worktable 106. At this time, by heating with the heating apparatus 109 configured in the apparatus for making integrated ion membrane sealing ring assembly, the ion membrane filtrate is solidified to a solid structure, wherein the sealing ring and the ion membrane 101 form an integrated structure. The schematic structure is shown in the side cross-section view in Fig. 4.

The surface of the integrated ion membrane sealing ring assembly made by the disclosed technical solution of the present disclosure can be substantially flat and smooth. Also, flexibility and airtightness of the ion membrane can be improved effectively. Thus, the lifetime of the ion membrane can be increased effectively. The ion membrane and the sealing ring are designed as an integrated structure, mounted in the first frame board and the second frame board, and connected and fixed by integrating. The mounted integrated ion membrane sealing ring assembly can be completely flat and smooth and is not easy to dislocate and wrinkle. Moreover, better sealing effect is provided during the use of the integrated ion membrane sealing ring assembly, so as to avoid electrolyte leakage and mixing of positive and negative electrolytes, thereby making the vanadium battery more stable and increasing working efficiency of the vanadium redox pile more effectively.

The above contents are further described in more detail descriptions with specific optimized technical solution for the present disclosure. The specific implementation of the present disclosure should not be limited to just these descriptions. To an ordinary person skilled in the art that the present disclosure belongs to, modifications may be made without departing from the scope of the claims, all of which should be considered as the protection scope of the present invention.

## Claims

1. A method of making a sealing ring ion membrane integrated component, wherein: the method of making the sealing ring ion membrane integrated component comprises steps:
A: mixing sulfonic resin with dimethylformamide based on a ratio of 0.95∼1.05: 90∼98, by weight and stirring;
B: filtering the mixed liquid obtained in step A;
C: placing the filtrate in a plastic container for precipitating;
D: seating the sealing ring into a worktable of a drying apparatus;
E: pouring the precipitated filtrate into the worktable of the drying apparatus, drying the same under a constant temperature selected from a temperature range of 110°C to 130°C for 80 to 100 minutes, and vacuuming while drying under the constant temperature;
F: taking the dried integrated ion membrane sealing ring assembly out of the drying apparatus, and then cooling the assembly.

2. The method of making a sealing ring ion membrane integrated component of claim 1, wherein:
step A comprises: putting sulfonic resin with dimethylformamide based on a ratio of 1: 94.45 by weight into a stainless steel container and mixing; treating the same under a constant temperature of 230°C and an air pressure of 0.3MPa∼0.4 MPa for one hour, and stirring based on a revolving speed of 60∼00 revolutions per minute while treating.

3. The method of making a sealing ring ion membrane integrated component of claim 2, wherein:
the sulfonic resin is perfluorinated sulfonic resin.

4. The method of making a sealing ring ion membrane integrated component of claim 1, wherein:
in step B, the filtering is carried out by using a titanium-made filter.

5. The method of making a sealing ring ion membrane integrated component of claim 1, wherein:
step C comprises: placing the filtrate in a plastic container and letting the same sit under a constant temperature of 25 °C for 20 days.

6. The method of making a sealing ring ion membrane integrated component of claim 5, wherein:
the plastic container is transparent or white.

7. The method of making a sealing ring ion membrane integrated component of claim 1, wherein:
step D comprises: seating a bottom side of the sealing ring into a sealing ring clamping slot of the worktable of the drying apparatus; and forming protrusions on a top side of the sealing ring.

8. The method of making a sealing ring ion membrane integrated component of claim 1, wherein:
step E comprises: pouring the precipitated filtrate into the worktable of the drying apparatus, wherein the worktable has a flat face, and sidewalls formed around a periphery of the worktable; drying the precipitated filtrate under a constant temperature of 120°C for 90 minutes, and vacuuming while drying under the constant temperature, wherein the drying apparatus is an electrical pulse infrared heater.

9. The method of making a sealing ring ion membrane integrated component of claim 1, wherein:
step F comprises: removing the ion membrane molded by drying, placing the same on a flat cooling table and cooling under room temperature.

## Patentansprüche

1. Verfahren zur Herstellung einer in eine dichtungsringförmige Ionenmembran integrierten Komponente, wobei: das Verfahren zur Herstellung der in eine dichtungsringförmige Ionenmembran integrierten Komponente die folgenden Schritte aufweist:
A: Mischen von Sulfonharz mit Dimethylformamid auf einer Grundlage eines Gewichtsverhältnisses von 0,95∼1,05 : 90∼98 und Umrühren;
B: Filtern der in Schritt A erhaltenen gemischten Flüssigkeit;
C: Platzieren des Filtrats in einen Kunststoffbehälter zum Fällen;
D: Einsetzen des Dichtungsrings auf einen Arbeitstisch einer Trocknungsvorrichtung;
E: Gießen des gefällten Filtrats auf den Arbeitstisch der Trocknungsvorrichtung, Trocknen desselben bei einer konstanten Temperatur, die aus einem Temperaturbereich von 110°C bis 130°C ausgewählt ist, während 80 bis 100 Minuten, und Vakuumieren während des Trocknens bei der konstanten Temperatur;
F: Entfernen der getrockneten integrierten Anordnung aus Ionenmembran und Dichtungsring aus der Trocknungsvorrichtung und anschließendes Kühlen der Anordnung.

2. Verfahren zur Herstellung einer in eine dichtungsringförmige Ionenmembran integrierten Komponente nach Anspruch 1, wobei:
Schritt A aufweist: Geben von Sulfonharz mit Dimethylformamid auf der Grundlage eines Gewichtsverhältnisses von 1 : 94,45 in einen Behälter aus rostfreiem Stahl und Mischen; Behandeln desselben bei einer konstanten Temperatur von 230°C und einem Luftdruck von 0,3MPa∼0,4MPa während einer Stunde, und Rühren auf einer Grundlage einer Drehgeschwindigkeit von 60∼100 Umdrehungen pro Minute während der Behandlung.

3. Verfahren zur Herstellung einer in eine dichtungsringförmige Ionenmembran integrierten Komponente nach Anspruch 2, wobei:
das Sulfonharz perfluoriertes Suflonharz ist.

4. Verfahren zur Herstellung einer in eine dichtungsringförmige Ionenmembran integrierten Komponente nach Anspruch 1, wobei:
in Schritt B das Filtern mittels eines Filters aus Titan durchgeführt wird.

5. Verfahren zur Herstellung einer in eine dichtungsringförmige Ionenmembran integrierten Komponente nach Anspruch 1, wobei:
Schritt C aufweist: Platzieren des Filtrats in einen Kunststoffbehälter und Stehenlassen desselben bei einer konstanten Temperatur von 25°C während 20 Tagen.

6. Verfahren zur Herstellung einer in eine dichtungsringförmige Ionenmembran integrierten Komponente nach Anspruch 5, wobei:
der Kunststoffbehälter durchsichtig oder weiß ist.

7. Verfahren zur Herstellung einer in eine dichtungsringförmige Ionenmembran integrierten Komponente nach Anspruch 1, wobei:
Schritt D aufweist: Einsetzen einer Unterseite des Dichtungsrings in einen Dichtungsring-Klemmschlitz des Arbeitstischs der Trocknungsvorrichtung; und Ausbilden von Vorsprüngen auf einer Oberseite des Dichtungsrings.

8. Verfahren zur Herstellung einer in eine dichtungsringförmige Ionenmembran integrierten Komponente nach Anspruch 1, wobei:
Schritt E aufweist: Gießen des gefällten Filtrats auf den Arbeitstisch der Trocknungsvorrichtung, wobei der Arbeitstisch eine flache Fläche und Seitenwände, die um einen Umfang des Arbeitstischs herum ausgebildet sind, aufweist; Trocknen des gefällten Filtrats bei einer konstanten Temperatur von 120°C während 90 Minuten, und Vakuumieren während des Trocknens bei der konstanten Temperatur, wobei die Trocknungsvorrichtung eine Infrarotheizung mit elektrischem Impuls ist.

9. Verfahren zur Herstellung einer in eine dichtungsringförmige Ionenmembran integrierten Komponente nach Anspruch 1, wobei:
Schritt F aufweist: Entfernen der durch Trocknen geformten Ionenmembran, Platzieren derselben auf einem flachen Kühltisch und Kühlen bei Raumtemperatur.

## Revendications

1. Procédé de fabrication de composant intégré à membrane ionique et bague d'étanchéité, dans lequel : le procédé de fabrication de composant intégré à membrane ionique et bague d'étanchéité comprend les étapes suivantes :
A : mélanger une résine sulfonique avec du diméthylformamide sur la base d'un rapport de 0,95∼1,05 : 90∼98 en poids, et l'agiter ;
B : filtrer le liquide mélangé obtenu à l'étape A ;
C : placer le filtrat dans un récipient en plastique pour le précipiter ;
D : insérer la bague d'étanchéité sur une table de travail d'un dispositif de séchage ;
E : verser le filtrat précipité sur la table de travail du dispositif de séchage, le sécher à une température constante choisie dans une plage de température comprise entre 110°C et 130°C pendant 80 à 100 minutes, et le mettre sous vide pendant le séchage à une température constante ;
F : retirer l'ensemble intégré de membrane ionique et bague d'étanchéité séché du dispositif de séchage, et puis refroidir l'ensemble.

2. Procédé de fabrication de composant intégré à membrane ionique et bague d'étanchéité selon la revendication 1, dans lequel :
l'étape A comprend : mettre de la résine sulfonique et du diméthylformamide sur la base d'un rapport de 1 : 94,45 en poids dans un récipient en acier inoxydable et les mélanger ; les traiter à une température constante de 230°C et sous une pression d'air de 0,3MPa∼0,4MPa pendant une heure, et les agiter sur la base d'une vitesse de rotation de 60∼100 révolutions par minute pendant le traitement.

3. Procédé de fabrication de composant intégré à membrane ionique et bague d'étanchéité selon la revendication 2, dans lequel :
la résine sulfonique est de la résine sulfonique perfluorée.

4. Procédé de fabrication de composant intégré à membrane ionique et bague d'étanchéité selon la revendication 1, dans lequel :
à l'étape B, le filtrage est effectué à l'aide d'un filtre en titane.

5. Procédé de fabrication de composant intégré à membrane ionique et bague d'étanchéité selon la revendication 1, dans lequel :
l'étape C comprend : placer le filtrat dans un récipient en plastique et le laisser reposer à une température constante de 25°C pendant 20 jours.

6. Procédé de fabrication de composant intégré à membrane ionique et bague d'étanchéité selon la revendication 5, dans lequel :
le récipient en plastique est transparent ou blanc.

7. Procédé de fabrication de composant intégré à membrane ionique et bague d'étanchéité selon la revendication 1, dans lequel :
l'étape D comprend : insérer un côté inférieur de la bague d'étanchéité dans une fente de serrage pour bague d'étanchéité de la table de travail du dispositif de séchage, et former des saillies sur un côté supérieur de la bague d'étanchéité.

8. Procédé de fabrication de composant intégré à membrane ionique et bague d'étanchéité selon la revendication 1, dans lequel :
l'étape E comprend : verser le filtrat précipité sur la table de travail du dispositif de séchage, la table de travail ayant une face plate et des parois latérales formées autour d'un périmètre de la table de travail ; sécher le filtrat précipité à une température constante de 120°C pendant 90 minutes, et le mettre sous vide pendant le séchage à une température constante, le dispositif de séchage étant un chauffage à infrarouge à impulsion électrique.

9. Procédé de fabrication de composant intégré à membrane ionique et bague d'étanchéité selon la revendication 1, dans lequel :
l'étape F comprend : retirer la membrane ionique moulée par le séchage, la placer sur une table de refroidissement plate et la refroidir à température ambiante.
